# EUROPEAN PATENT SPECIFICATION

(11) **EP 1 398 105 B1**
(45) Date of publication and mention of the grant of the patent: **07.03.2007**
(21) Application number: 03020343.4
(22) Date of filing: 09.09.2003
(51) Int. Cl.: B23K 11/31, F15B 15/26, F15B 11/12, F15B 11/036

(54) **Two-stage actuating cylinder, particularly for operating a welding gun**
Zweistufiger Arbeitszylinder, insbesondere für Schweisszangen
Vérin à deux étages, notamment pour des pinces de soudage

(30) Priority: 10.09.2002 IT TO20020786
(43) Date of publication of application: 17.03.2004
(73) Proprietor: GF Welding S.p.A., 10137 Torino (IT)
(72) Inventor: Rostagno, Domenico, 10127 Torino (IT); Pozzi, Cesare Angelo, 10139 Torino (IT); Vigoroso, Andrea, 10141 Torino (IT)
(74) Representative: Franzolin, Luigi

(56) References cited:
- EP-A- 0 180 519
- DE-U- 9 315 211
- FR-A- 2 781 016
- US-A- 2 568 228

## Description

The present invention relates to a two-stroke actuating cylinder, particularly for operating a welding gun.

To spot weld sheet metal elements, welding guns are used which are operated by pneumatic actuating cylinders carried and controlled manually by an operator.

In actual use, the welding gun is fully open when the cylinder rod is fully withdrawn, and is closed for welding when the rod is extracted; and the rod must be able to move from the withdrawn to the extracted position in two successive, separate stroke portions characterized by different speeds and/or operating forces. That is, the rod must be able to perform a so-called "approach" or "pre-stroke" by which the welding gun is partly closed, and a subsequent so-called "work" stroke by which the welding gun performs the actual welding operation.

To perform the welding operation, greater operating force is required along the work stroke than along the approach stroke.

US 2 568 228 A discloses a two stage fluid pressure cylinder according to the preamble of claim 1 having an end to which a load to be moved may be connected; the load causes biasing of the unit to a retracted position when pressure therein is released.

FR 2 781 016 A discloses a two stage actuator comprising an actuator body, a working rod and a pre-stroke rod, which can be locked to the actuator body after an approach stroke of the working rod; along the approach stroke, the working rod moves together with the actuator body with respect to the pre-stroke rod.

It is an object of the present invention to provide a two-stroke actuating cylinder, particularly for operating a welding gun, which meets the above requirement in a straightforward, low-cost manner, is relatively compact, and permits the addition of a desired number of auxiliary stages to increase the operating force during the work stroke.

According to the present invention, there is provided a two-stroke actuating cylinder, particularly for operating a welding gun as defined in Claim 1.

A non-limiting embodiment of the invention will be described by way of example with reference to the accompaning drawings, in which :
Figure 1 shows a schematic cross section of a preferred embodiment of the two-stroke actuating cylinder, particularly for operating a welding gun, according to the present invention and shown in a rest configuration; and
Figures 2 to 4 are similar to Figure 1, and show the operating sequence of a rod of the Figure 1 cylinder.

Number 1 in the accompanying drawings indicates a two-stroke actuating cylinder, particularly for operating a welding gun (not shown). In actual use, cylinder 1 is carried manually by an operator, is operated by a pneumatic power system (not shown), and comprises a liner 2 extending along an axis 3 and defined by a number of axial portions fitted to a front end plate 5, to a rear end plate 6, and to five plates 7, 8, 9, 10, 11 in intermediate axial positions between plates 5, 6.

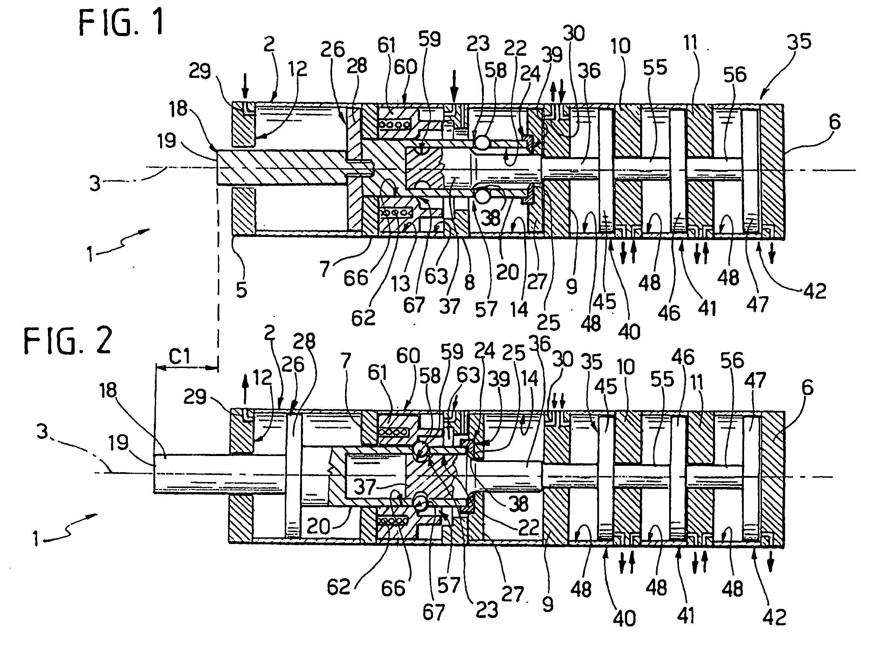

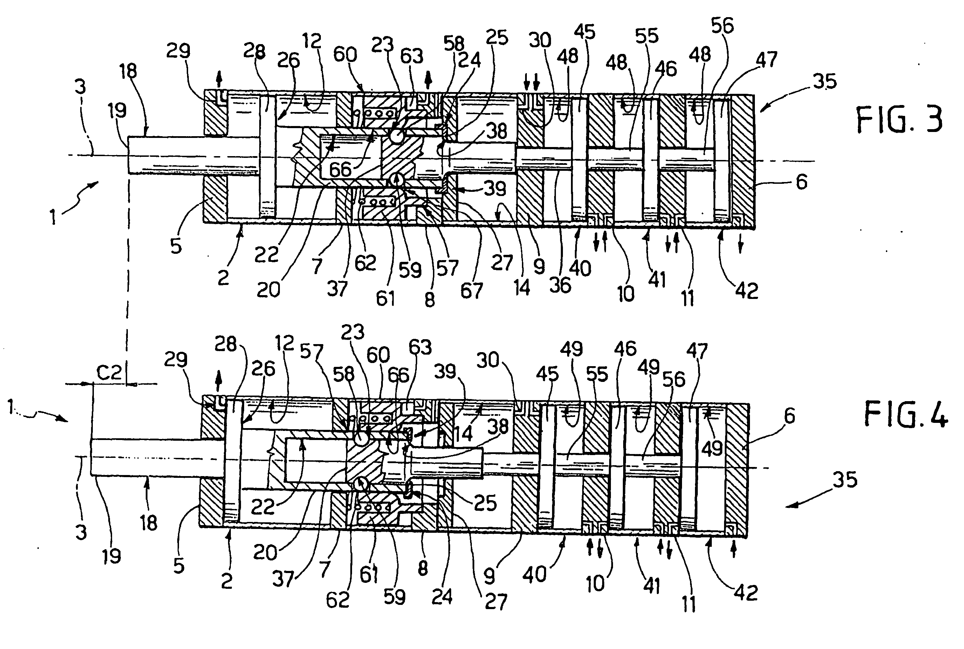

Plates 5, 7, 8, 9 axially define a front chamber 12 and two intermediate chambers 13, 14, which are formed in series with one another inside liner 2 and house a main rod 18. Rod 18 extends along axis 3, and is movable axially between a withdrawn limit position (Figure 1) corresponding to an operating configuration in which the welding gun is fully open, and an extracted limit position (Figure 4) corresponding to an operating configuration in which the welding gun is closed to perform the welding operation.

Rod 18 comprises two opposite end portions 19, 20, of which portion 19 slides in fluidtight manner through plate 5 to activate the welding gun, while portion 20 slides in fluidtight manner through plate 7 and extends through plate 8. Portion 20 is defined by a cylindrical wall defining a dead axial seat 22, comprises a number of angularly equally spaced radial through holes 23, and is fitted with a ring nut 24 screwed to the end of rod 18 and comprising an inner annular portion 25 projecting radially to partly close the inlet of seat 22.

Cylinder 1 comprises a piston actuating assembly 26 for moving rod 18 along a first stroke - or so-called "pre-stroke" or "approach" stroke indicated C1 in Figure 2 and equal to about 40 millimetres - between the withdrawn position and an intermediate axial position corresponding to an operating configuration in which the welding gun is partly closed.

Assembly 26 comprises two pistons 27, 28. Piston 28 is connected integrally to rod 18, between portions 19 and 20, and slides axially in fluidtight manner inside chamber 12 to draw rod 18 into the withdrawn position, by feeding pressurized air into the front part of chamber 12 along a conduit 29 formed in plate 5, and by exhausting the rear part of chamber 12 (in a manner not shown). Piston 27, on the other hand, is a separate body from rod 18, slides axially in fluidtight manner inside chamber 14, and rests axially against ring nut 24 to move rod 18 into the intermediate axial position, by feeding pressurized air into the rear part of chamber 14 along a conduit 30 formed in plate 9, and by exhausting the front part of chamber 14.

As shown in the accompanying drawings, cylinder 1 also comprises a piston actuating assembly 35 for moving rod 18 between the intermediate and extracted positions (Figures 3 and 4) along a second stroke or so-called work" stroke consecutive to stroke C1, indicated C2 in Figure 4, and equal to about 20 millimetres.

Assembly 35 comprises a secondary rod 36, which is coaxial and aligned with rod 18, extends loosely through piston 27 and in fluidtight manner through plate 9, and comprises an end portion 37 engaging seat 22 in axially sliding manner.

Portion 37 has a rear annular shoulder 38 axially facing portion 25 of ring nut 24, so as to form part, together with ring nut 24, of an axial stop device 39 (Figure 2) defining the intermediate axial position of rod 18 as rod 18 is expelled from liner 2.

In the preferred example shown, assembly 35 comprises three thrust stages or modules 40, 41, 42 arranged axially in series between plates 9 and 6, and packed axially together by a number of ties (not shown) outside liner 2.

Stages 40, 41, 42 are separated axially by plates 10 and 11, and comprise respective pistons 45, 46, 47, each of which axially separates in fluidtight manner a relative variable-volume front chamber 48 (Figures 1 to 3) and a relative variable-volume rear chamber 49 (Figure 4), which communicate with the pneumatic system via respective air inlet/outlet conduits.

Piston 45 is connected integrally to rod 36 in a manner not shown, while pistons 46, 47 are integral with respective rods 55, 56, which slide axially in fluidtight manner through respective plates 10, 11, and rest axially against respective pistons 45, 46.

By virtue of stages 40, 41, 42, rod 36 is movable axially between a first limit position (Figures 1 to 3) - wherein chambers 48 receive pressurized air, while chambers 49 are exhausted to withdraw pistons 45, 46, 47 onto respective plates 10, 11, 6 - and a second limit position (Figure 4) - wherein chambers 49 receive pressurized air, while chambers 48 are exhausted to push pistons 45, 46, 47 onto respective plates 9, 10, 11.

With reference to Figures 3 and 4, assembly 35 also comprises a releasable axial locking device 57 for keeping rods 18, 36 axially integral with each other along stroke C2, and which in turn comprises a number of balls 58, each housed in radially movable manner inside a relative hole 23.

Device 57 also comprises an annular retaining groove 59 formed on portion 37 and so located as to be aligned radially with holes 23 when rod 18 is in the intermediate axial position, and when rod 36 is in the first limit position (Figure 2).

Device 57 also comprises a single-acting pneumatic actuator 60 for engaging and retaining balls 58 inside groove 59, and comprising an annular piston 61, which is slid in fluidtight manner inside chamber 13, and coaxially with rod 18, by the opposite thrusts exerted, on one side, by the elastic force of a spring 62 interposed axially between piston 61 and plate 7, and, on the other, by the pressure in a variable-volume control chamber 63 defined axially by plate 8 and piston 61. More specifically, when chamber 63 is pressurized, piston 61 compresses spring 62 and moves towards plate 7 into a rest position (Figure 2), whereas, when chamber 63 is exhausted, piston 61 is pushed by spring 62 towards plate 8 into an operating position (Figure 3).

Piston 61 is defined radially inwards by a cylindrical surface 66, which slides axially in fluidtight manner on portion 20, and by a lead-in surface 67, which is connected to surface 66 and diverges axially towards plate 8 to push balls 58 radially into groove 59 as piston 61 moves into the operating position.

In the rest condition of cylinder 1 shown in Figure 1, chambers 48 and the front part of chamber 12 receive pressurized air to keep rods 18, 36 withdrawn, while chamber 63 receives pressurized air to keep piston 61 in the rest position.

To perform stroke C1, chambers 48 and 63 remain pressurized, the front part of chamber 12 is exhausted along conduit 29, and the rear part of chamber 14 is supplied with pressurized air along conduit 30 to push piston 27 towards plate 8 and so partly expel rod 18 At the end of stroke C1, as shown in Figure 2, ring nut 24 rests axially against portion 37, thus arresting the forward movement of rod 18. At this point, holes 23 are aligned with groove 59, and device 57 can be activated by exhausting chamber 63, so that piston 61 moves into the operating position to lock rods 18, 36 axially to each other (Figure 3).

For rod 18 to perform stroke C2, conduits 29, 30 remain exhausted and pressurized respectively, while still leaving piston 27 idle, piston 61 remains in the operating position to allow surface 66 to keep balls 58 engaged inside groove 59, and stages 40, 41, 42 are activated.

More specifically, to move rod 18 from the intermediate axial position to the extracted position, chambers 48 are exhausted and chambers 49 pressurized (Figure 4). The pressure of the air supplied by the pneumatic system therefore acts on all three pistons 45, 46, 47, which exert an axial force on rods 36, 18 equal to roughly three times the axial force exerted by assembly 26 along stroke C1.

Conversely, to withdraw rod 18 from the extracted to the intermediate axial position, chambers 49 are exhausted and chambers 48 pressurized, with no change in the operating conditions of assembly 26 and actuator 60.

To withdraw rod 18 from the intermediate axial position to the withdrawn position, piston 61 is moved into the rest position to permit radial movement of balls 58, chambers 48 remain pressurized and chambers 49 exhausted (Figure 1), pressurized air is fed into conduit 29, and conduit 30 is exhausted to push piston 28 towards plate 7.

To assemble cylinder 1, after first inserting rod 18 inside chambers 12, 13, 14, portion 37 is inserted axially inside seat 22, ring nut 24 is fitted about rod 36 and screwed to portion 20, piston 27 is then fitted about rod 36, and stage 40 is connected by axially closing chamber 14 by means of plate 9, and by fixing piston 45 to rod 36. At this point, chamber 49 of stage 40 can be closed by plate 6, or one or more auxiliary stages - defined in the example shown by stages 41, 42 - may be inserted in series between stage 40 and plate 6.

Placing rod 36 in an intermediate axial position between piston 45 and portion 20 of rod 18 therefore enables any number of auxiliary stages to be added behind stage 40, and therefore without altering the diameter of cylinder 1, to increase the force required to operate the welding gun along stroke C2.

Cylinder 1 is also modular, i.e. the number of auxiliary stages to be added to stage 40 can be determined at assembly, by the rods of the auxiliary stages (in particular, rods 55, 56) simply resting against the piston of the axially preceding stage.

Device 57 provides for firm, reliable axial locking of rods 18, 36, even in the presence of relatively high operating forces and inertia; is fairly easy to produce and assemble; and, as opposed to engaging automatically at the end of stroke C1, is activated by the pneumatic system by means of actuator 60, so that actual engagement and release of rods 36, 18 is kept under control at all times.

Seat 22, in which portion 37 of rod 36 slides, provides for guiding portion 37 axially, and for reducing the axial dimensions of cylinder 1; while ring nut 24 accurately defines the intermediate axial position of rod 18 as rod 18 is expelled at stroke C1, and, at the end of stroke C1, transmits the inertial forces of rod 18 to rod 36, which, at the same time, is maintained in the first limit position by the pressure in chambers 48.

In a variation not shown, rod 18 has no ring nut 24, and is arrested in the intermediate axial position, as it is expelled, by balls 58 axially contacting surface 67, though the inertial forces acting on rod 18 at the end of stroke C1 tend to be transmitted undesirably to balls 58 and actuator 60.

Providing two pistons 27, 28, one for expulsion and the other for withdrawal of rod 18 at stroke C1, simplifies selection and control of the pneumatic system solenoid valves. More specifically, by not being integral with rod 18, piston 27 of cylinder 1 makes stroke C2 independent of the pressure in the rear part of chamber 14, and therefore of the type of solenoid valves commonly used.

In a variation not shown, as opposed to pressurizing chamber 14, stroke C1 can be performed by simply activating piston 28, with no piston 27, by pressurizing chamber 12 from the rear, i.e. by forming conduit 30 in plate 7, to expel rod 18. In this variation, when rod 18 withdraws into the intermediate axial position at stroke C2, both the rear and front part of chamber 12 must be exhausted, which means changing the type of solenoid valves normally used in the pneumatic system to control airflow to and from assembly 26, and which supply pressurized air selectively at all times to one of conduits 30, 29.

Clearly, changes may be made to cylinder 1 as described and illustrated herein without, however, departing from the scope of the claims.

In particular, device 57 and, particularly, actuator 60 may be other than as described and illustrated, and/or rods 18, 36 may be parallel, as opposed to coaxial.

## Claims

1. A two-stroke actuating cylinder (1), particularly for operating a welding gun; the cylinder comprising
- a liner (2);
- a main rod (18) movable along a respective axis (3) between a withdrawn position and an extracted position with respect to said liner (2);
- a first piston actuating assembly (26) for moving said main rod (18) to and from said withdrawn position along a first axial stroke (C1); and
- a second piston actuating assembly (35) for moving said main rod (18) to and from said extracted position along a second axial stroke (C2) consecutive to said first stroke (C1); said second piston actuating assembly (35) comprising:
i. at least a first piston (45);
ii. a secondary rod (36) interposed axially between said first piston (45) and an axial end (20) of said main rod (18) and moved parallel to said axis (3) by said first piston (45); and
iii. releasable axial locking means (57) for maintaining said main rod and said secondary rod (18, 36) axially integral with each other along said second stroke (C2);
**characterised in that** said first piston actuating assembly (26) comprises a withdrawal piston (28), which is axially, slidable inside a chamber (12) of said liner (2) to push said main rod (18) into said withdrawn position along said first axial stroke (C1) with respect to said liner (2) .

2. A cylinder as claimed in Claim 1, **characterized in that** said second piston actuating assembly (35) also comprises at least one additional force-amplifying stage (41) comprising a second piston (46) in series with said first piston (45).

3. A cylinder as claimed in Claim 2, **characterized in that** said force-amplifying stage (41) also comprises an intermediate rod (55) interposed axially between said first and second piston (45, 46), integral with said second piston (46), and resting axially against said first piston (45).

4. A cylinder as claimed in Claim 2 or 3, **characterized in that** said second piston actuating assembly (35) comprises a number of said force-amplifying stages (41, 42) in series with one another.

5. A cylinder as claimed in any one of the foregoing Claims, **characterized in that** said main rod and said secondary rod (18, 36) are coaxial, and comprise respective ends (20, 37) engaged one inside a dead axial seat (22) of the other and sliding axially with respect to each other.

6. A cylinder as claimed in Claim 5, **characterized in that** said dead axial seat (22) is formed in the end (20) of said main rod (18).

7. A cylinder as claimed in any one of the foregoing Claims, **characterized by** also comprising axial stop means (39) for arresting said main rod (18), as it is expelled from said liner (2), in an intermediate axial position between said first (C1) and said second (C2) stroke.

8. A cylinder as claimed in Claim 7, **characterized in that** said axial stop means (39) comprise a first (24) and a second (38) shoulder carried respectively by said main rod (18) and said secondary rod (36), and which rest axially against each other in said intermediate axial position.

9. A cylinder as claimed in Claim 8, **characterized in that** said first shoulder (24) is connected in an axially fixed position to said main rod (18), and extends radially from said main rod (18) towards said axis (3) in a position facing said second shoulder (38).

10. A cylinder as claimed in Claim 9, **characterized in that** said first shoulder (24) is defined by a ring nut screwed to the end (20) of said main rod (18).

11. A cylinder as claimed in any one of the foregoing Claims, **characterized in that** said first piston actuating assembly (26) comprises an expulsion piston (27) separate from said withdrawal piston (28).

12. A cylinder as claimed in Claim 11, **characterized in that** said expulsion piston (27) rests axially against said main rod (18), and is detached axially from said main rod (18) along said second stroke (C2).

13. A cylinder as claimed in anyone of the foregoing claims, **characterized in that** said withdrawal piston (28) is connected in an axially fixed position to said main rod (18).

14. A cylinder as claimed in any one of the foregoing Claims, **characterized in that** said releasable axial locking means (57) comprise a ball locking device (58, 59) interposed between said main rod and said secondary rod (18, 36).

15. A cylinder as claimed in Claim 14, **characterized in that** said releasable axial locking means (57) comprise an actuator (60) controllable to activate said ball locking device (58, 59) when said main rod (18) is in an intermediate axial position between said first (C1) and said second (C2) stroke.

16. A cylinder as claimed in Claim 15, **characterized in that** said actuator (60) is housed in said liner (2).

17. A cylinder as claimed in Claim 16, **characterized in that** said ball locking device (58, 59) comprises a number of balls (58) carried in radially movable positions by said main rod (18), and a retaining seat (59) formed in said secondary rod (36); said actuator (60) comprising an actuating piston (61), which slides coaxially with said main rod and said secondary rod (18, 36), and comprises an annular lead-in surface (67) for engaging said balls (58) inside said retaining seat (59) as the actuating piston (61) slides axially.

18. A cylinder as claimed in Claim 17, **characterized in that** said actuating piston (61) has an inner cylindrical surface (66) connected to said annular lead-in surface (67) and cooperating with said balls (58) at said second stroke (C2) of said main rod (18) to keep the balls (58) inside said retaining seat (59).

## Patentansprüche

1. Zweistufiger Arbeitszylinder (1), insbesondere für Schweisszangen, bestehend aus
- einer Buchse (2);
- einer Hauptstange (18), die bezüglich der Buchse (2) entlang einer Achse (3) zwischen einer Rückzugsposition und einer Auszugsposition bewegbar ist;
- einer ersten Kolbenbetätigungseinrichtung (26), die dazu bestimmt ist, die Hauptstange (18) entlang eines ersten Hubes (C1) in Richtung auf die genannte Rückzugsposition hin und von dieser fort zu bewegen, und
- einer zweiten Kolbenbetätigungseinrichtung (35), die dazu bestimmt ist, die Hauptstange (18) in Richtung auf die genannte Auszugsposition hin und von dieser fort entlang eines zweiten, auf den ersten Hub (C1) folgenden Hubes (C2) zu bewegen,
- wobei die zweite Kolbenbetätigungseinrichtung (35) aus
i. wenigstens einem ersten Kolben (45);
ii. einer zweiten Stange (36), die axial zwischen dem ersten Kolben (45) und einem axialen Ende (20) der Hauptstange (18) angeordnet und mittels des ersten Kolbens (45) parallel zu der Achse (3) bewegbar ist und
iii. lösbaren axial wirksamen Verriegelungsmitteln (57), die dazu bestimmt sind, die Hauptstange (18) und die zweite Stange (36) entlang des zweiten Hubes (C2) axial zusammenhängend zu halten,
besteht, **dadurch gekennzeichnet,**
**dass** die erste Kolbenbetätigungseinrichtung (26) aus einem Rückzugskolben (28) besteht, der in einer Kammer (12) der Buchse (2) axial gleitfähig angeordnet und dazu bestimmt ist, die Hauptstange (18) bezüglich der Buchse (2) in Richtung auf die genannte Rückzugsposition hin entlang des ersten axialen Hubes (C1) zu bewegen.

2. Arbeitszylinder nach Anspruch 1, **dadurch gekennzeichnet, dass** die zweite Kolbenbetätigungseinrichtung (35) zusätzlich ferner wenigstens eine Kraftverstärkungsstufe (41) aufweist, die aus einem zweiten, in einer Reihe mit dem ersten Kolben (45) angeordneten Kolben (46) besteht.

3. Arbeitszylinder nach Anspruch 2, **dadurch gekennzeichnet, dass** die Kraftverstärkungsstufe (41) femer eine Zwischenstange (55) aufweist, die axial zwischen dem ersten und dem zweiten Kolben (45, 46) angeordnet ist, die einstückig mit dem zweiten Kolben (46) ausgebildet ist und die axial an dem ersten Kolben (45) abgestützt ist.

4. Arbeitszylinder nach Anspruch 2 oder 3, **dadurch gekennzeichnet, dass** die zweite Kolbenbetätigungseinrichtung (35) aus einer Anzahl Kraftverstärkungsstufen (41, 42) besteht, die in einer Reihe angeordnet sind.

5. Arbeitszylinder nach einem der vorangegangenen Ansprüche, **dadurch gekennzeichnet, dass** sich die Hauptstange (18) und die zweite Stange (36) koaxial zueinander erstrecken und jeweils Enden (20, 37) aufweisen, die innerhalb eines nach Art einer Blindbohrung angelegten Sitzes (22) miteinander im Eingriff stehen und gleitfähig relativ zueinander geführt sind.

6. Arbeitszylinder nach Anspruch 5, **dadurch gekennzeichnet, dass** sich der genannte, nach Art einer Blindbohrung angelegte Sitz (22) in dem Ende (20) der Hauptstange (18) befindet.

7. Arbeitszylinder nach einem der vorangegangenen Ansprüche , **dadurch gekennzeichnet, dass** er femer axial wirksame Anschlagmittel (39) aufweist, die dazu bestimmt sind, die Hauptstange (18) in einer zwischen dem ersten Hub (C1) und dem zweiten Hub (C2) befindlichen axialen Zwischenposition zu halten, während die genannte Hauptstange aus der Buchse (2) ausgestoßen wird.

8. Arbeitszylinder nach Anspruch 7, **dadurch gekennzeichnet, dass** die genannten Anschlagmittel (39) erste (24) und zweite Schultern (38) umfassen, die sich jeweils auf der Hauptstange (18) sowie der zweiten Stange (36) befinden und welche in der genannten axialen Zwischenposition axial aneinander abgestützt sind.

9. Arbeitszylinder nach Anspruch 8, **dadurch gekennzeichnet, dass** die erste Schulter (24) mit der Hauptstange (18) in fester Verbindung steht und sich ausgehend von der Hauptstange (18) radial und axial in Richtung der Achse (3) bis zu einer Position erstreckt, welche der zweiten Schulter (38) gegenüberliegt.

10. Arbeitszylinder nach Anspruch 9, **dadurch gekennzeichnet, dass** die erste Schulter (24) durch eine Ringmutter gebildet wird, die auf das Ende (20) der Hauptstange (18) aufgeschraubt ist.

11. Arbeitszylinder nach einem der vorangegangenen Ansprüche, **dadurch gekennzeichnet, dass** die erste Kolbenbetätigungseinrichtung (26) einen Ausstoßkolben (27) aufweist, der von dem Rückzugskolben (28) getrennt ist.

12. Arbeitszylinder nach Anspruch 11, **dadurch gekennzeichnet, dass** der Ausstoßkolben (27) axial an der Hauptsstange (18) abgestützt ist und in axialer Richtung entlang des zweiten Hubes (C2) von der Hauptstange (18) gelöst wird.

13. Arbeitszylinder nach einem der vorangegangenen Ansprüche, **dadurch gekennzeichnet, dass** der Rückzugskolben (28) mit der Hauptsstange (18) in axialer Richtung in fester Verbindung steht.

14. Arbeitszylinder nach einem der vorangegangenen Ansprüche, **dadurch gekennzeichnet, dass** das lösbare, axial wirksame Verriegelungsmittel (57) aus einem kugelgestützten Verriegelungsmittel (58, 59) besteht, welches sich zwischen der Hauptstange (18) und der zweiten Stange (36) befindet.

15. Arbeitszylinder nach Anspruch 14, **dadurch gekennzeichnet, dass** das lösbare, axial wirksame Verriegelungsmittel (57) ein Betätigungsorgan (60) aufweist, welches mit Hinblick auf eine Betätigung des kugelgestützten Verriegelungsmittels (58, 59) steuerbar ist, sobald sich die Hauptstange (18) in einer axialen Zwischenposition zwischen dem ersten Hub (C1) und dem zweiten Hub (C2) befindet.

16. Arbeitszylinder nach Anspruch 15, **dadurch gekennzeichnet, dass** das Betätigungsorgan (60) in der Buchse (2) angeordnet ist.

17. Arbeitszylinder nach Anspruch 16, **dadurch gekennzeichnet, dass** das kugelgestützte Verriegelungsmittel (58, 59) aus einer Anzahl Kugeln (58), die in radial bewegbaren Positionen durch die Hauptstange (18) getragen werden und einem Rückhaltesitz (59) besteht, der in die zweite Stange (36) eingeformt ist, wobei das Betätigungsorgan (60) aus einem Betätigungskolben (61), der koaxial zu der Hauptstange (18) und der zweiten Stange (36) gleitfähig angeordnet ist, besteht und eine ringförmige Führungsfläche (67) umfasst, die für einen Eingriff der Kugeln (58) mit dem Rückhaltesitz (59) bestimmt ist, während der Betätigungskolben (61) axial gleitet.

18. Arbeitszylinder nach Anspruch 17, **dadurch gekennzeichnet, dass** der Betätigungskolben (61) eine innere zylindrische Oberfläche (66) aufweist, die mit der ringförmigen Führungsfläche (67) in Verbindung steht und während des zweiten Hubes (C2) der Hauptstange (18) zum Zusammenwirken mit den Kugeln (58) bestimmt ist, um diese innerhalb des Rückhaltesitzes (59) zu halten.

## Revendications

1. Cylindre (1) d'actionnement à deux courses, servant particulièrement à mettre en oeuvre un pistolet à souder ; le cylindre comprenant
une chemise (2) ;
une tige principale (18) mobile le long d'un axe respectif (3) entre une position de retrait et une position d'extraction par rapport à ladite chemise (2) ;
un premier ensemble (26) de piston d'actionnement destiné à déplacer ladite tige principale (18) en l'approchant et en l'écartant de ladite position de retrait en suivant une première course axiale (C1) ; et
un second ensemble (35) de piston d'actionnement destiné à déplacer ladite tige principale (18) en l'approchant et en l'écartant de ladite position d'extraction en suivant une seconde course axiale (C2) consécutive à ladite première course (C1) ; le second ensemble (35) de piston d'actionnement comprenant:
i. au moins un premier piston (45) ;
ii. une tige secondaire (36) interposée axialement entre ledit premier piston (45) et une extrémité axiale (20) de ladite tige principale (18) et mue parallèlement audit axe (3) par ledit premier piston (45) ; et
iii. un moyen (57) de verrouillage axial libérable destiné à maintenir ladite tige principale et ladite tige secondaire (18, 36) pour les rendre axialement solidaires le long de ladite seconde course (C2) ;
**caractérisé en ce que** ledit premier ensemble (26) de piston d'actionnement comprend un piston (28) de retrait, lequel peut coulisser axialement à l'intérieur d'une chambre (12) de ladite chemise (2) pour pousser ladite tige principale (18) dans ladite position de retrait en suivant ladite première course axiale (C1) par rapport à ladite chemise (2).

2. Cylindre selon la revendication 1, **caractérisé en ce que** ledit second ensemble (35) de piston d'actionnement comprend également au moins un étage supplémentaire (41) d'amplification de force, comprenant un second piston (46) agencé en série avec ledit premier piston (45).

3. Cylindre selon la revendication 2, **caractérisé en ce que** ledit étage (41) d'amplification de force comprend également une tige intermédiaire (55) interposée axialement entre lesdits premier et second pistons (45, 46), d'un seul tenant avec ledit second piston (46), et appuyant axialement contre ledit premier piston (45).

4. Cylindre selon la revendication 2 ou 3, **caractérisé en ce que** ledit second ensemble (35) de piston d'actionnement comprend un certain nombre desdits étages (41, 42) d'amplification de force agencés en série les uns par rapport aux autres.

5. Cylindre selon l'une quelconque des revendications précédentes, **caractérisé en ce que** ladite tige principale et ladite tige secondaire (18, 36) sont coaxiales et comprennent des extrémités respectives (20, 37), l'une engageant à l'intérieur d'un logement axial borgne (22) de l'autre, et coulissant axialement l'une par rapport l'autre.

6. Cylindre selon la revendication 5, **caractérisé en ce que** ledit logement axial borgne (22) est formé dans l'extrémité (20) de ladite tige principale (18).

7. Cylindre selon l'une quelconque des revendications précédentes, **caractérisé par le fait qu'**il comprend également des moyens (39) de butée axiale permettant d'arrêter ladite tige principale (18), lorsqu'elle est expulsée de ladite chemise (2), dans une position axiale intermédiaire entre ladite première course (C1) et ladite seconde course (C2).

8. Cylindre selon la revendication 7, **caractérisé en ce que** lesdits moyens (39) de butée axiale comprennent des premier (24) et second (38) épaulements portés respectivement par ladite tige principale (18) et ladite tige secondaire (36), et qui appuient axialement l'un contre l'autre dans ladite position axiale intermédiaire.

9. Cylindre selon la revendication 8, **caractérisé en ce que** ledit premier épaulement (24) est assujetti, dans une position axialement fixe, à ladite tige principale (18), et s'étend radialement de ladite tige principale (18) en direction dudit axe (3) dans une position qui fait face audit second épaulement (38).

10. Cylindre selon la revendication 9, **caractérisé en ce que** ledit premier épaulement (24) est défini par un écrou à anneau vissé sur l'extrémité (20) de ladite tige principale (18).

11. Cylindre selon l'une quelconque des revendications précédentes, **caractérisé en ce que** ledit premier ensemble (26) de piston d'actionnement comprend un piston (27) d'expulsion distinct dudit piston (28) de retrait.

12. Cylindre selon la revendication 11, **caractérisé en ce que** ledit piston (27) d'expulsion appuie axialement contre ladite tige principale (18), et se détache axialement de ladite tige principale (18) le long de ladite seconde course (C2).

13. Cylindre selon l'une quelconque des revendications précédentes, **caractérisé en ce que** ledit piston (28) de retrait est lié, dans une position axialement fixe, à ladite tige principale (18).

14. Cylindre selon l'une quelconque des revendications précédentes, **caractérisé en ce que** lesdits moyens (57) de verrouillage axial libérable comprennent un dispositif (58, 59) de verrouillage à billes interposé entre ladite tige principale et ladite tige secondaire (18, 36).

15. Cylindre selon la revendication 14, **caractérisé en ce que** lesdits moyens (57) de verrouillage axial libérable comprennent un actionneur (60) pouvant être commandé pour activer ledit dispositif (58, 59) de verrouillage à billes lorsque ladite tige principale (18) est dans une position axiale intermédiaire entre ladite première course (C1) et ladite seconde course (C2).

16. Cylindre selon la revendication 15, **caractérisé en ce que** ledit actionneur (60) est logé dans ladite chemise (2) .

17. Cylindre selon la revendication 16, **caractérisé en ce que** ledit dispositif (58, 59) de verrouillage à billes comprend un certain nombre de billes (58) supportées dans des positions mobiles radialement par ladite tige principale (18), et un logement (59) de retenue formé dans ladite tige secondaire (36) ; ledit actionneur (60) comprenant un piston (61) d'actionnement, qui coulisse coaxialement à ladite tige principale et à ladite tige secondaire (18, 36), et comprend une surface annulaire (67) de guidage destinée à engager lesdites billes (58) à l'intérieur dudit logement (59) de retenue lorsque le piston (61) d'actionnement coulisse axialement.

18. Cylindre selon la revendication 17, **caractérisé en ce que** ledit piston (61) d'actionnement comporte une surface cylindrique intérieure (66) liée à ladite surface annulaire (67) de guidage et coopérant avec lesdites billes (58) dans ladite seconde course (C2) de ladite tige principale (18) afin de retenir les billes (58) à l'intérieur dudit logement (59) de retenue.
